# EUROPÄISCHE PATENTANMELDUNG

(11) **EP 1 544 934 A2**
(43) Veröffentlichungstag der Anmeldung: **22.06.2005**
(21) Anmeldenummer: 04029826.7
(22) Anmeldetag: 16.12.2004
(51) Int. Cl.: H01M 8/06, H01M 8/04

(54) **System und Verfahren zur Erzeugung eines Reformats**

(30) Priorität: 17.12.2003 DE 10359231
(71) Anmelder: Webasto AG, 82131 Stockdorf (DE)
(72) Erfinder: Günther, Norbert, 18311 Ribnitz-Damgarten (DE); Käding, Stefan, 17309 Zerrenthin (DE)

(57) **Zusammenfassung**

Die Erfindung betrifft ein System zur Erzeugung eines Reformats (10), das dazu vorgesehen ist, einem Brennstoffzellenstack zugeführt zu werden, wobei das System einen Reformer (12) aufweist, dem zur Erzeugung des Reformats (10) Brennstoff (14), Luft (16) und Anodenabgas (18) des Brennstoffzellenstacks zugeführt werden kann.

Erfindungsgemäß ist vorgesehen, dass das System Mittel (20) aufweist, die dazu geeignet sind, Anodenabgas (18) vor der Zuführung zu dem Reformer (12) zumindest teilweise zu oxidieren.

Weiterhin betrifft die Erfindung ein entsprechendes Verfahren zur Erzeugung eines Reformats.

## Beschreibung

Die Erfindung betrifft ein System zur Erzeugung eines Reformats, das dazu vorgesehen ist, einem Brennstoffzellenstack zugeführt zu werden, wobei das System einen Reformer aufweist, dem zur Erzeugung des Reformats Brennstoff, Luft und Anodenabgas des Brennstoffzellenstacks zugeführt werden kann.

Weiterhin betrifft die Erfindung ein Verfahren zur Erzeugung eines Reformats, das dazu vorgesehen ist, einem Brennstoffzellenstack zugeführt zu werden, wobei das Reformat in einem Reformer erzeugt wird, dem zur Erzeugung des Reformats Brennstoff, Luft und Anodenabgas des Brennstoffzellenstacks zugeführt wird.

Die gattungsgemäßen Systeme und Verfahren werden im Zusammenhang mit der Umwandlung von chemischer Energie in elektrische Energie eingesetzt. Zu diesem Zweck werden dem Reformer Brennstoff und Luft, vorzugsweise in Form eines Brennstoff/Luft-Gemisches, zugeführt. In dem Reformer erfolgt dann eine Umsetzung des Brennstoffes mit dem Luftsauerstoff, wobei vorzugsweise das Verfahren der partiellen Oxidation durchgeführt wird.

Das so erzeugte Reformat wird dann einer Brennstoffzelle beziehungsweise einem Brennstoffzellenstack zugeführt, wobei durch die kontrollierte Umsetzung von Wasserstoff, als Bestandteil des Reformats, und Sauerstoff elektrische Energie freigesetzt wird. Zur Erhöhung des Wirkungsgrades ist es bereits bekannt, dem Reformer zusätzlich Anodenabgas des Brennstoffzellenstacks zuzuführen, um in dem Anodenabgas enthaltenes Wasser und in dem Anodenabgas enthaltenen Wasserstoff zumindest teilweise wiederzugewinnen.

Der Reformer kann, wie bereits erwähnt, so ausgelegt sein, dass das Verfahren der partiellen Oxidation durchgeführt wird, um Reformat zu erzeugen. In diesem Fall ist es bei der Verwendung von Diesel als Brennstoff besonders nützlich, vor der partiellen Oxidation Vorreaktionen durchzuführen. Auf diese Weise können mit "kalter Flamme" langkettige Dieselmoleküle in kürzerkettige Moleküle umgesetzt werden, was letztlich den Reformerbetrieb begünstigt. Allgemein wird der Reaktionszone des Reformers ein Gasgemisch zugeführt, welches zu H₂ und CO umgesetzt wird. Ein weiterer Bestandteil des Reformats sind N₂ aus der Luft sowie, in Abhängigkeit von der Luftzahl und der Temperatur, gegebenenfalls CO₂, H₂O und CH₄. Im Normalbetrieb wird der Brennstoffmassenstrom entsprechend der angeforderten Leistung geregelt, und der Luftmassenstrom wird auf einen Lambdawert beziehungsweise eine Luftzahl im Bereich von λ = 0,4 geregelt. Die Reformierungsreaktion kann durch unterschiedliche Sensoren, beispielsweise Temperatursensoren und Gassensoren, überwacht werden.

Neben dem Verfahren der partiellen Oxidation ist es ebenfalls möglich, eine autotherme Reformierung durchzuführen. Das Verfahren der partiellen Oxidation wird im Gegensatz zur autothermen Reformierung dadurch herbeigeführt, dass Sauerstoff unterstöchiometrisch zugeführt wird. Beispielsweise hat das Gemisch eine Luftzahl von λ = 0,4. Die partielle Oxidation ist exotherm, so dass es in problematischer Weise zu einer unerwünschten Aufheizung des Reformers kommen kann. Ferner neigt die partielle Oxidation zu einer verstärkten Rußbildung. Zur Vermeidung der Rußbildung kann die Luftzahl λ größer und/oder ein Teil des für die Oxidation verwendeten Sauerstoffs durch Wasserdampf bereitgestellt werden. Da die Oxidation mit Wasserdampf endotherm verläuft, ist es möglich, das Verhältnis zwischen Brennstoff, Sauerstoff und Wasserdampf so einzustellen, dass insgesamt weder Wärme freigesetzt noch Wärme verbraucht wird. Die so erreichte autotherme Reformierung beseitigt daher die Probleme der Rußbildung und einer unerwünschten Überhitzung des Reformers.

Ebenfalls ist es möglich, dass im Anschluss an die Oxidation in dem Reformer weitere Schritte der Gasbehandlung erfolgen, wobei insbesondere der partiellen Oxidation eine Methanisierung nachgeschaltet sein kann.

Ein gängiges Brennstoffzellensystem ist beispielsweise ein PEM-System ("proton exchange membrane"), welches typischerweise bei Betriebstemperaturen zwischen Raumtemperatur und etwa 100 °C betrieben werden kann. Aufgrund der niedrigen Betriebstemperaturen wird dieser Brennstoffzellentyp häufig für mobile Anwendungen genutzt, beispielsweise in Kraftfahrzeugen.

Weiterhin sind Hochtemperaturbrennstoffzellen bekannt, sogenannte SOFC-Systeme ("solid oxide fuel cell"). Diese Systeme arbeiten beispielsweise im Temperaturbereich von zirka 800 °C, wobei ein Feststoffelektrolyt ("solid oxide") in der Lage ist, den Transport von Sauerstoffionen zu übernehmen. Der Vorteil von derartigen Hochtemperaturbrennstoffzellen gegenüber PEM-Systemen besteht insbesondere in der Robustheit gegenüber mechanischen und chemischen Belastungen.

Als Anwendungsgebiet für Brennstoffzellen in Verbindung mit den gattungsgemäßen Systemen kommen neben stationären Anwendungen insbesondere Anwendungen im Kraftfahrzeugbereich in Frage, beispielsweise als "auxiliary power unit" (APU).

Der Erfindung liegt die Aufgabe zugrunde, die gattungsgemäßen Systeme und Verfahren derart weiterzubilden, dass der Reformierungswirkungsgrad weiter erhöht wird.

Diese Aufgabe wird durch die Merkmale der unabhängigen Ansprüche gelöst.

Vorteilhafte Weiterbildungen und Ausgestaltung der Erfindung ergeben sich aus den abhängigen Ansprüchen.

Das erfindungsgemäße System baut auf dem gattungsgemäßen Stand der Technik dadurch auf, dass es Mittel aufweist, die dazu geeignet sind, Anodenabgas vor der Zuführung zu dem Reformer zumindest teilweise zu oxidieren. Durch die zumindest teilweise Oxidation des Anodenabgases wird die Wassermenge erhöht, die in den Reformer eingeleitet wird, wodurch der Reformierungswirkungsgrad deutlich verbessert wird.

Bei bevorzugten Ausführungsformen des erfindungsgemäßen Systems ist vorgesehen, dass die Mittel eine Zündquelle und/oder einen Katalysator umfassen. Darüber hinaus umfassen die Mittel vorzugsweise eine Reaktionskammer in der die zumindest teilweise Oxidation stattfindet.

Eine bevorzugte Weiterbildung des erfindungsgemäßen Systems sieht vor, dass die Mittel die zumindest teilweise Oxidation mit zur Erzeugung des Reformats vorgesehener Luft durchführen können. Dies schließt jedoch nicht aus, dass dem Reformer gegebenenfalls zusätzliche Frischluft zugeführt wird. Die erfindungsgemäß zur Durchführung der zumindest teilweisen Oxidation vorgesehenen Mittel können bei allen Ausführungsformen entweder dem Reformer zugeordnet sein beziehungsweise einen Bestandteil von diesem bilden, oder sie können separat an irgendeiner geeigneten Stelle des Systems vorgesehen sein.

Im Zusammenhang mit dem erfindungsgemäßen System wird es als besonders vorteilhaft erachtet, dass der Reformer einen Reaktionsraum aufweist, dem der Brennstoff, das zumindest teilweise oxidierte Anodenabgas und die nach der zumindest teilweisen Oxidation verbleibende Restluft zugeführt werden können. Dabei kann das oxidierte Anodenabgas und die verbleibende Restluft gegebenenfalls durch die Oxidation vorgewärmt in den Reaktionsraum eingebracht werden, was sich in vielen Fällen vorteilhaft auf die Reformierung auswirkt.

Das erfindungsgemäße Verfahren baut auf dem gattungsgemäßen Stand der Technik dadurch auf, dass Anodenabgas vor der Zuführung zu dem Reformer zumindest teilweise oxidiert wird. Dadurch ergeben sich die im Zusammenhang mit dem erfindungsgemäßen System erläuterten Vorteile und Eigenschaften in gleicher oder ähnlicher Weise, weshalb zur Vermeidung von Wiederholungen auf die entsprechenden Ausführungen im Zusammenhang mit dem erfindungsgemäßen System verwiesen wird.

Gleiches gilt sinngemäß für die folgenden bevorzugten Ausführungsformen des erfindungsgemäßen Verfahrens, wobei zur Vermeidung von Wiederholungen auch diesbezüglich auf die entsprechenden Ausführungen im Zusammenhang mit dem erfindungsgemäßen System verwiesen wird.

Bei einer bevorzugten Ausführungsform des erfindungsgemäßen Verfahrens ist vorgesehen, dass die zumindest teilweise Oxidation mit Hilfe einer Zündquelle und/oder eines Katalysators durchgeführt wird.

Weiterhin wird es als vorteilhaft für das erfindungsgemäße Verfahren erachtet, dass die zumindest teilweise Oxidation mit zur Erzeugung des Reformats vorgesehener Luft durchgeführt wird.

Auch für das erfindungsgemäße Verfahren wird bevorzugt, dass das Reformat in einem Reaktionsraum erzeugt wird, dem der Brennstoff, das zumindest teilweise oxidierte Anodenabgas und die nach der zumindest teilweisen Oxidation verbleibende Restluft zugeführt wird.

Ein wesentlicher Grundgedanke der Erfindung besteht darin, dass der Reformierungswirkungsgrad erheblich verbessert werden kann, wenn dem Reformierungsprozess zumindest teilweise oxidiertes Anodenabgas zugeführt wird.

Bevorzugte Ausführungsformen der Erfindung werden nachfolgend anhand der zugehörigen Zeichnungen beispielhaft erläutert.

Es zeigen:
- Figur 1: ein schematisches Blockschaltbild, das eine Ausführungsform des erfindungsgemäßen Systems veranschaulicht; und
- Figur 2: ein Flussdiagramm, das eine Ausführungsform des erfindungsgemäßen Verfahrens veranschaulicht.

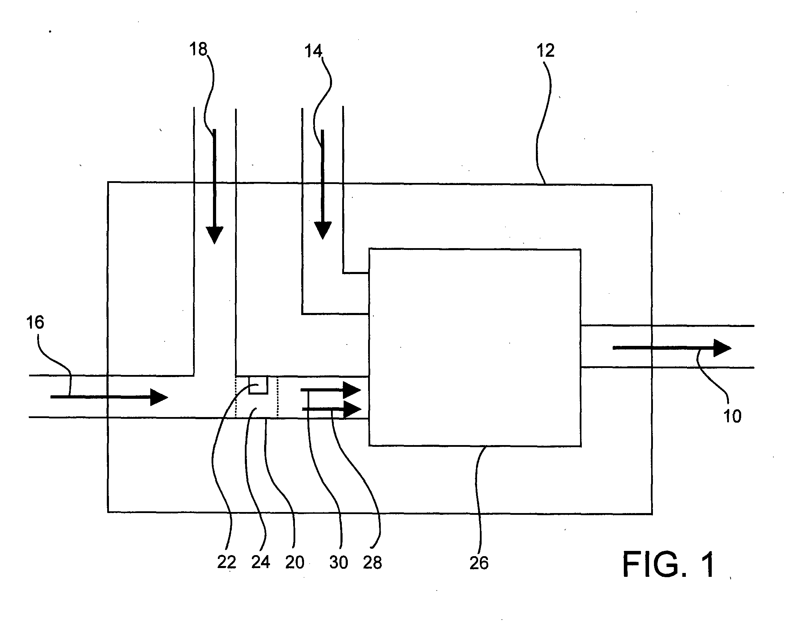

Das in Figur 1 in Blockschaltbildform dargestellte System umfasst einen Reformer 12, dem über geeignete Leitungen beziehungsweise Kanäle Brennstoff 14, Luft 16 und Anodenabgas 18 zugeführt wird, wobei das Anodenabgas 18 von einem nicht dargestellten Brennstoffzellenstack stammt, der von dem Reformer 12 mit Reformat 10 versorgt wird. Die Luft 16 und das Anodenabgas 18 werden Mitteln 20 in Form einer Reaktionskammer zugeführt, wo zumindest eine teilweise Oxidation des Anodenabgases 18 erfolgt. Die Mittel 20 beziehungsweise die Reaktionskammer kann gegebenenfalls eine schematisch dargestellte Zündquelle 22 und/oder einen Katalysator 24 umfassen. Der Reformer 12 weist einen Reaktionsraum 26 auf, indem das Reformat 10 erzeugt wird. Dem Reaktionsraum 26 werden der Brennstoff 14, das zumindest teilweise oxidierte Anodenabgas 28 sowie die nach der zumindest teilweisen Oxidation verbleibende Restluft 30 zugeführt. Auf diese Weise wird die in den Reaktionsraum 26 eingebrachte Wassermenge erhöht, wodurch der Reformierungswirkungsgrad verbessert wird.

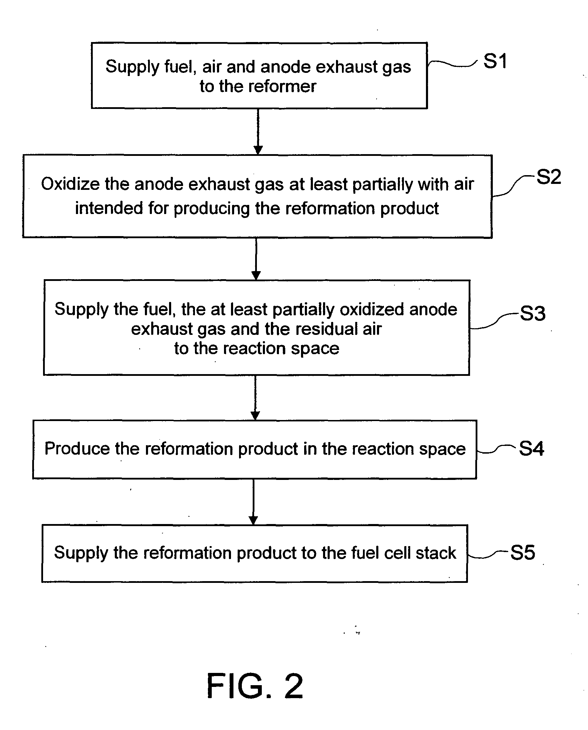

Das in Figur 2 dargestellte Flussdiagramm veranschaulicht eine Ausführungsform des erfindungsgemäßen Verfahrens, wobei dieses Verfahren in vorteilhafter Weise mit dem System von Figur 1 durchgeführt werden kann.

Im Schritt S1 wird einem Reformer Brennstoff, Luft und Anodenabgas zugeführt.

Anschließend wird im Schritt S2 das Anodenabgas mit zur Erzeugung des Reformats vorgesehener Luft zumindest teilweise oxidiert.

Im Schritt S3 wird dem Reaktionsraum des Reformers der Brennstoff, das zumindest teilweise oxidierte Anodenabgas und die Restluft zugeführt.

Anschließend wird im Schritt S4 das Reformat erzeugt.

Das im Schritt S4 erzeugte Reformat wird schließlich im Schritt S5 dem Brennstoffzellenstack zugeführt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Reformat
- 12: Reformer
- 14: Brennstoff
- 16: Luft
- 18: Anodenabgas
- 20: Mittel zur Durchführung der Oxidation
- 22: Zündquelle
- 24: Katalysator
- 26: Reaktionsraum
- 28: zumindest teilweise oxidiertes Anodenabgas
- 30: Restluft

## Patentansprüche

1. System zur Erzeugung eines Reformats (10), das dazu vorgesehen ist, einem Brennstoffzellenstack zugeführt zu werden, wobei das System einen Reformer (12) aufweist, dem zur Erzeugung des Reformats (10) Brennstoff (14), Luft (16) und Anodenabgas (18) des Brennstoffzellenstacks zugeführt werden kann, **dadurch gekennzeichnet, dass** es Mittel (20) aufweist, die dazu geeignet sind, Anodenabgas (18) vor der Zuführung zu dem Reformer (12) zumindest teilweise zu oxidieren.

2. System nach Anspruch 1, **dadurch gekennzeichnet, dass** die Mittel (20) eine Zündquelle (22) und/oder einen Katalysator (24) umfassen.

3. System nach Anspruch 1 oder 2, **dadurch gekennzeichnet, dass** die Mittel (20) die zumindest teilweise Oxidation mit zur Erzeugung des Reformats (10) vorgesehener Luft (16) durchführen können.

4. System nach einem der vorhergehende Ansprüche, **dadurch gekennzeichnet, dass** der Reformer (12) einen Reaktionsraum (26) aufweist, dem der Brennstoff (14), das zumindest teilweise oxidierte Anodenabgas (28) und die nach der zumindest teilweisen Oxidation verbleibende Restluft (30) zugeführt werden können.

5. Verfahren zur Erzeugung eines Reformats (10), das dazu vorgesehen ist, einem Brennstoffzellenstack zugeführt zu werden, wobei das Reformat (10) in einem Reformer (12) erzeugt wird, dem zur Erzeugung des Reformats (10) Brennstoff (14), Luft (16) und Anodenabgas (18) des Brennstoffzellenstacks zugeführt wird, **dadurch gekennzeichnet, dass** Anodenabgas (18) vor der Zuführung zu dem Reformer (12) zumindest teilweise oxidiert wird.

6. Verfahren nach Anspruch 5, **dadurch gekennzeichnet, dass** die zumindest teilweise Oxidation mit Hilfe einer Zündquelle (22) und/oder eines Katalysators (24) durchgeführt wird.

7. Verfahren nach Anspruch 5 oder 6, **dadurch gekennzeichnet, dass** die zumindest teilweise Oxidation mit zur Erzeugung des Reformats (10) vorgesehener Luft (16) durchgeführt wird.

8. Verfahren nach einem der Ansprüche 5 bis 7, **dadurch gekennzeichnet, dass** das Reformat (10) in einem Reaktionsraum (26) erzeugt wird, dem der Brennstoff (14), das zumindest teilweise oxidierte Anodenabgas (28) und die nach der zumindest teilweisen Oxidation verbleibende Restluft (30) zugeführt wird.
